**Europäisches Patentamt**

(19) **European Patent Office**

**Office européen des brevets**

(11) Veröffentlichungsnummer: **0 172 397**
**B1**

(12) # EUROPÄISCHE PATENTSCHRIFT

(45) Veröffentlichungstag der Patentschrift:
12.10.88

(51) Int. Cl.⁴: **H 02 K 3/24,** H 02 K 1/20,
H 02 K 9/00

(21) Anmeldenummer: 85108765.0

(22) Anmeldetag: 13.07.85

(54) Elektrische Maschine mit indirekt gekühlter Statorwicklung.

(30) Priorität: 13.08.84 CH 3879/84

(43) Veröffentlichungstag der Anmeldung:
26.02.86 Patentblatt 86/9

(45) Bekanntmachung des Hinweises auf die Patenterteilung:
12.10.88 Patentblatt 88/41

(84) Benannte Vertragsstaaten:
AT BE CH DE FR GB IT LI NL SE

(56) Entgegenhaltungen:
CH-A-323 733
DE-A-654 087
DE-C-314 521
DE-C-574 962
FR-A-606 101
US-A-2 780 739

(73) Patentinhaber: BBC Brown Boveri AG,
Haselstrasse, CH- 5401 Baden (CH)

(72) Erfinder: Joho, Reinhard, Lärchenstrasse 9, CH-
5024 Küttigen (CH)
Erfinder: Weigelt, Klaus, Im Freudenspiel 15,
D-7891 Kadelburg (DE)

EP 0 172 397 B1

## Beschreibung

Die Erfindung bezieht sich auf eine elektrische Maschine mit indirekt gekühlter Statorwicklung. Eine elektrische Maschine dieser Gattung ist beispielsweise aus der Zeitschrift "Brown Boveri Mitteilungen" Nr. 6, 1976, S. 392 ff, insbesondere Bild 2 auf Seite 394, bekannt.

Bei der bekannten elektrischen Maschine wird die aus Massivleitern bestehende Statorwicklung durch Hindurchleiten von Kühlgas durch radial verlaufende Kühlkanäle im Statorblechpaket indirekt gekühlt. Die Wärme fliesst durch die Isolation und im Nutbereich zusätzlich über das Statoreisen ab. Das Gehäuse dient bei der Statorventilation als Gasführung. Dadurch ist es möglich, dem Blechkörper von mittleren und langen Maschinen das Kühlgas aus dem Stirnraum nicht nur vom Luftspalt her, sondern durch sogenannte Mehrkammersysteme auch vom Blechrücken her zuzuführen, um eine gleichmässigere axiale Temperaturverteilung zu erreichen.

Beim Mehrkammersystem ist der Stator in Bezug auf die Kühlung in mehrere axial hintereinanderliegende und im Blechrücken voneinander getrennte Kammern unterteilt. In eine erste Kammer strömt über das Statorgehäuse und die Kühlkanäle zwischen aufeinanderfolgenden Teilblechpaketen Kühlgas ein. Es verteilt sich im Luftspalt in einen ersten Strom, der in der in Richtung Maschinenmitte benachbarten zweiten Kammer zusammen mit dem bereits erwärmten Rotoraktivteil-Kühlgas zum Statorrücken zurückströmt, und einen zweiten Strom, der in der anderen benachbarten dritten Kammer, zusammen mit der Luftspaltleckage und eventuellem Rotorwickelkopfkühlgas, zum Statorrücken zurückströmt. Die aus dieser Kühlgasführung resultierende Temperaturverteilungskurve weist im Bereich der zweiten Kammer einen Heisspunkt auf, der für die Ausnutzung und damit für die Grenzleistung der Maschine massgebend ist.

Es ist Ziel der Erfindung, eine elektrische Maschine mit indirekt gekühlter Statorwicklung anzugeben, welche eine möglichst gleichmässige Temperaturverteilungskurve aufweist.

Die Lösung dieser Aufgabe erfolgt durch die in den Patentansprüchen gekennzeichnete Erfindung.

Aus der DE-C-574 962 ist es an sich bekannt, dass eine Wicklungsheißzone im Ständer einer elektrischen Maschine mit Hilfe von axial verlaufenden Kanälen vermieden werden kann, doch geht aus dieser Druckschrift nicht hervor, wie solche Kanäle bei einer gattungsgemässen elektrischen Maschine angeordnet werden sollen, um eine möglichst gleichmässige Temperaturverteilungskurve über die gesamte axiale Länge zu erreichen.

Der Vorteil der Erfindung ist insbesondere darin zu sehen, dass nunmehr praktisch die gesamte Statorwicklung in allen Zonen mit Kaltgas beaufschlagt wird. Das bereits erwärmte Kühlgas vom Rotor kommt nicht mehr unmittelbar mit den Statorwicklungsleitern in Kontakt. Die zusätzlichen axial verlaufenden Kanäle schwächen zwar den Zahnquerschnitt; die daraus resultierende erhöhte magnetische Induktion im Engpass zwischen zwei Zähnen erreicht aber kaum den kritischen Wert im Bereich des Statornutkeils. Zudem ist gerade die betroffene Partie des Zahnes gut gasgekühlt.

Die Erfindung wird nachstehend anhand der Zeichnung, in welcher Ausführungsbeispiele vereinfacht dargestellt sind, näher erläutert.

In der Zeichnung zeigt:

Fig. 1 einen vereinfachten Längsschnitt durch den Mittelteil einer elektrischen Maschine mit einer ersten Variante der Kühlgasführung,

Fig. 2 einen vereinfachten Längsschnitt analog Fig. 1 mit einer zweiten Variante der Kühlgasführung,

Fig. 3 einen Querschnitt durch den Statorblechkörper gemäss Fig. 1 längs deren Linie AA,

Fig. 4 einen zweiten Querschnitt durch den Statorblechkörper gemäss Fig. 1 längs deren Linie BB,

Fig. 5 einen dritten Querschnitt durch den Statorblechkörper gemäss Fig. 1 längs deren Linie CC,

Fig. 6 einen vierten Querschnitt durch den Statorblechkörper gemäss Fig. 1 längs deren Linie AA mit zusätzlichen Gasführungen im Kühlschlitz.

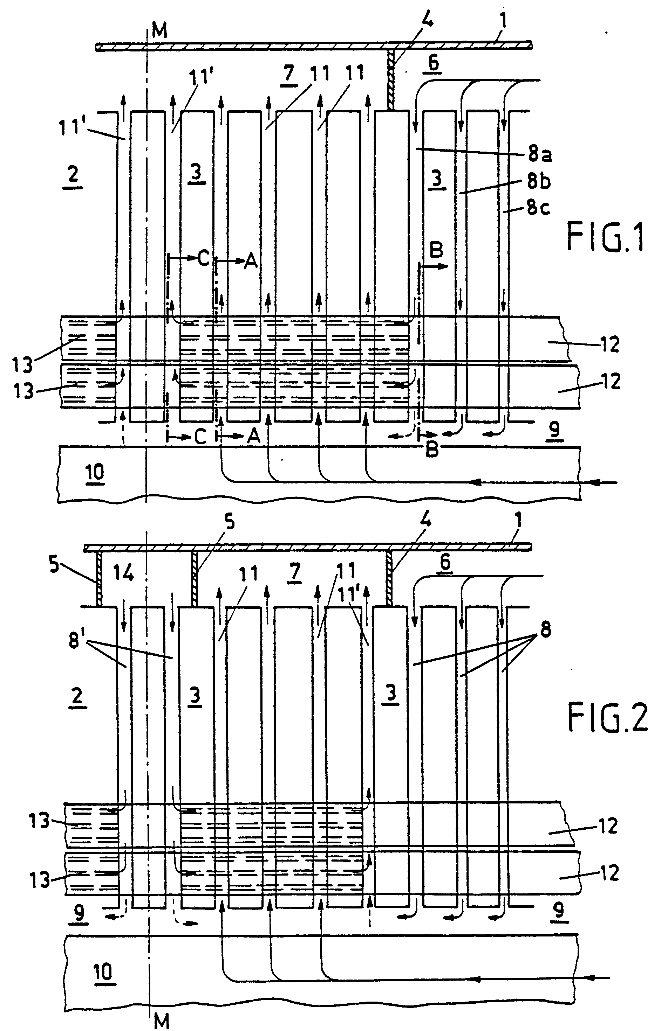

In Fig. 1 ist der Mittelteil eines Turbogenerators im Längsschnitt stark vereinfacht dargestellt. In einem Gehäuse 1 ist ein Blechkörper 2, bestehend aus einer Vielzahl voneinander distanzierter Teilblechpakete 3 aufgehängt. Zwischen dem Blechkörperrücken und dem Mantel des Gehäuses 1 ist ein Ringraum vogesehen, der durch Zwischenwände 4, 5 in Kammern unterteilt ist. Eine erste Zuströmkammer ist mit 6, eine Abströmkammer mit 7 bezeichnet. Von der Kammer 6 aus strömt ein Kühlgas - veranschaulicht durch Pfeile - vom nicht dargestellten Ventilator durch die zwischen den einzelnen Teilblechpaketen vorhandenen ersten Kühlschlitze B zum Maschinenluftspalt 9 und vereinigt sich dort mit dem Kühlgas aus dem Rotor 10 und gelangt über zweite Kühlschlitze 11 in die Abströmkammer 7. Das Kühlgas bestreicht auf dem beschriebenen Wege die in Nuten des Blechkörpers 2 angeordneten Statorwicklungsleiter 12 und führt dabei die in ihnen und auch im Blechkörper entstehende Verlustwärme ab. Insoweit entspricht der Aufbau der aus den Brown Boveri Mitteilungen a.a.O. bekannten elektrischen Maschine.

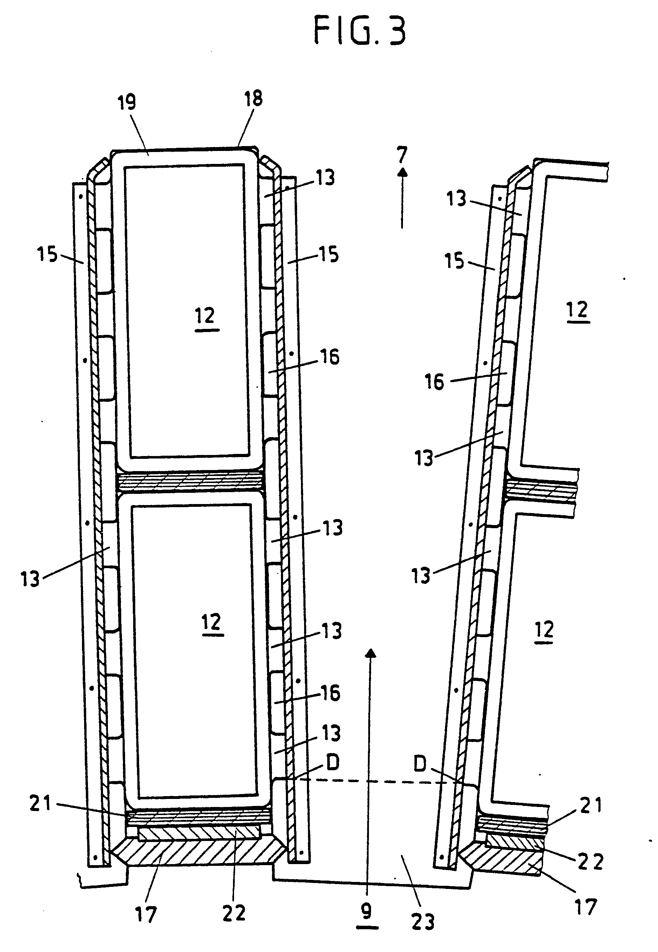

Um nun zu verhindern, dass das bereits erhitzte Kühlgas vom Rotor die Wicklungsleiter 12 im Bereich der zweiten Kühlschlitze 11 beaufschlagt, sind diese in diesem Bereich gegenüber dem radial nach aussen strömenden Kühlgas abgeschottet, was im einzelnen anhand Fig. 3 aufgezeigt wird. Die Kühlung der Wicklungsleiter im genannten Bereich erfolgt durch Frischgas, das in axial verlaufenden Kanälen 13, die gegen die Wicklungsleiter 12 hin offen sind und einströmseitig mit einem der ersten Kühlschlitze 8a, der der Zwischenwand 4 unmittelbar benachbart ist, verbunden sind. Die Kanäle 13 münden abströmseitig in einen der zweiten Kühlschlitze 11' in Maschinenmitte M. Somit bleibt die Strömung des Warmgases vom Luftspalt 9 hin zur Abströmkammer 7 praktisch ungestört, berührt aber die Statorwicklungsleiter 12 nicht mehr.

Die Ausführungsvariante gemäss Fig. 2 arbeitet nach dem gleichen Prinzip, weist jedoch folgenden konstruktiven Unterschied auf. Das Kaltgas zur Anspeisung der Kanäle 13 wird von einer in Maschinenmitte M gelegenen separaten Zuströmkammer 14, welche von der Abströmkammer 7 durch eine Zwischenwand 5 getrennt ist, durch Kühlschlitze 8' in der Maschinenmitte geliefert. Die Kanäle 13 münden wie bei Fig. 1 in den der Zwischenwand 4 unmittelbar benachbarten zweiten Kühlschlitz.

Ein Querschnitt durch den luftspaltseitigen Teil des Statorblechkörpers 1 nach Fig. 1 bzw. Fig. 2 längs deren Linie AA ist in Fig. 3 in vergrössertem Maßstab dargestellt.

Wie im Zusammenhang mit Fig. 1 und 2 bereits ausgeführt, sind die einzelnen Teilblechpakete 3 durch Distanzstege 15 (Fig. 3) beabstandet. Die Distanzstege bestehen aus Metall mit L-Profil, wobei ein Schenkel auf einer Stirnfläche des Teilblechpakets 3 befestigt ist. In der Seitenwand der Statorwicklungsnut sind eine Reihe von Ausnehmungen vorgesehen, welche die senkrecht zur Zeichenebene verlaufenden zusätzlichen Kühlkanäle 13 bilden. Die Ausnehmungen werden dabei schon im Zuge des Ausstanzens der Bleche des Statorblechkörpers mitausgestanzt. Im Ausführungsbeispiel sind pro Nutseitenwand sechs Ausnehmungen vorgesehen. Die vorspringenden Nutseitenwände 16 stützen dabei die Statorwicklungsleiter 12 hinreichend ab. Die Distanzstege sind derart angeordnet, dass ihre in Maschinenlängsrichtung verlaufenden Schenkel mit den Kanälen 13 fluchten, um die Strömung in den Kanälen 13 nicht zu behindern.

Die Abschottung der Kanäle 13 erfolgt im luftspaltseitigen Bereich durch den Nutkeil 17, am Nutgrund durch Umbiegen der freien Enden der Distanzstege zum Wicklungsleiter 12 hin. Aus Fig. 3 geht ferner hervor, dass durch die Abschottung der Statorwicklungsleiter 12 die Strömung des Heissgases aus dem Maschinenluftspalt 9 hin zu der Abströmkammer 7 nicht behindert wird.

Aus Gründen der Vollständigkeit sind in Fig. 3 auch die Nutgrund-Isolation 18, die Stabisolation 19, eine Nutzwischenlage 20 und Keilunterlagen 21, 22 miteingezeichnet.

Die magnetische Induktion in den Zähnen 23 wird zwar im Engpass senkrecht zur Linie DD zwischen zwei Kanälen 13 angehoben, erreicht aber nicht den kritischen Wert im Bereich des Nutkeils 17. Zudem ist gerade die betroffene Partie des Zahnes durch das durch die Kanäle 13 stömende Kaltgas gut gekühlt.

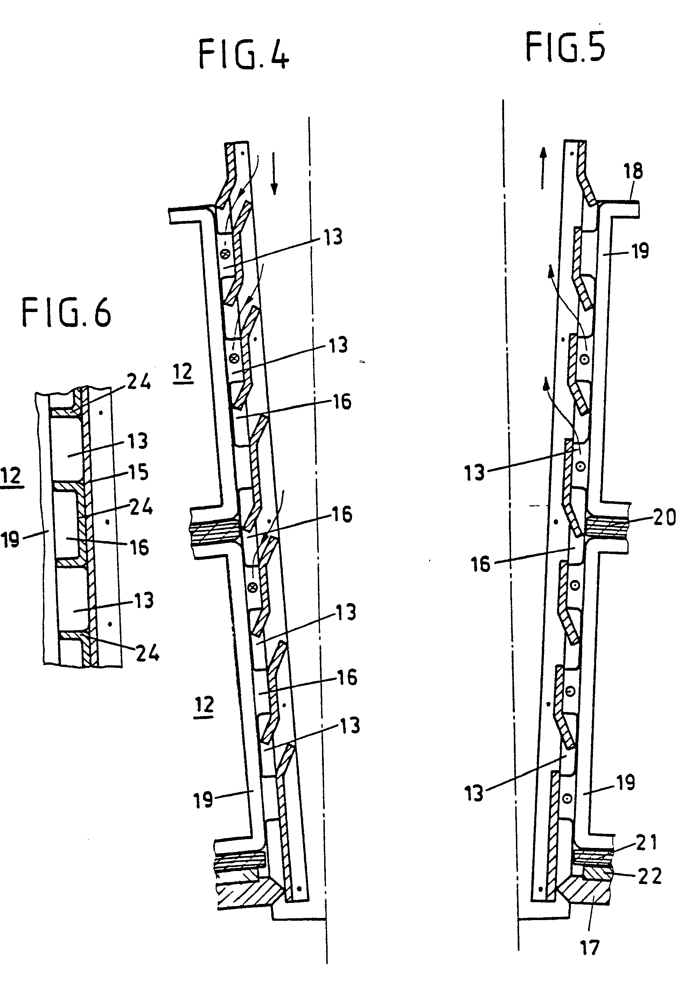

In Fig. 4 ist die Eintrittspartie der Kanäle 13 im Kühlschlitz 8a bzw. 8' dargestellt. Die Strömungsrichtung des Kühlgases ist durch Pfeile veranschaulicht. Die axial verlaufenden Schenkel der Distanzstege 15 sind jeweils im Bereich der Kanäle 13 aufgetrennt und wechselweise zum Wicklungsleiter 12 hin - bzw. vom Wicklungsleiter weggebogen, um die Stauwirkung am Einströmpunkt der Kanäle zu unterstützen. In gleicher Weise können die Distanzstege 15 an der Austrittspartie der Kanäle 13 ausgebildet werden, wobei hier die vom Wicklungsleiter wegweisenden Schenkelteile entfernt werden können. Das beschriebene Auftrennen und Abbiegen der Schenkel der Distanzstege bietet darüber hinaus die Möglichkeit, die Mengenverteilung des Kühlgases auf die einzelnen Kanäle einzustellen.

Die Gesamtmenge an Kühlgas, welche den Kanälen 13 zugeführt wird lässt sich in einfacher Weise durch Bemessung des Querschnitts des zugeordneten Kühlschlitzes (8a in Fig. 1, 8' in Fig. 2) einstellen, wobei gegebenenfalls Blenden (nicht eingezeichnet) verwendet werden können.

Weiterhin bietet sich die Möglichkeit, durch Anbringen eines den Raum zwischen zwei Nutkeilen 17 ausfüllenden Distanzstegs den Kühlschlitz 8a (Fig. 1) bzw. 8' (Fig. 2) gegen den Maschinenluftspalt 9 mehr oder weniger zu verschliessen. Auf diese Weise können die betreffenden Kühlschlitze ganz oder teilweise zur Führung des Kühlgases für die Wicklungsleiter reserviert werden.

Die Druckverluste im Gas entlang der axialen Kanäle 13 durch Unstetigkeiten im Kanalquerschnitt im Bereich jedes Schlitzes 11 können mit Gasführungsprofilstücken 24, die z. B. auf die Distanzstege 15 gepunktet sind, vermindert werden. (Fig. 6).

Die Einspeisung des Kühlgases in die Schlitze 8a bzw. 8' muss nicht zwangsläufig ab dem gleichen Druckerzeuger erfolgen wie für die anderen Gasströme, es ist auch eine Einspeisung über ein separates Gebläse möglich, was sich insbesondere bei der in Fig. 2 dargestellten Variante anbietet.

Die Erfindung ermöglicht ohne tiefe Eingriffe in Auslegung, Konstruktion und Aufbau die Nivellierung des Temperaturniveaus über die gesamte Eisenlänge einer elektrischen Maschine mit indirekt gekühlter Statorwicklung.

## Patentansprüche

1. Elektrische Maschine mit einem Gehäuse, einem Stator, mit in Statornuten angeordneten indirekt gekühlten Statorwicklungsleitern (12) und einem Rotor (10), wobei der Statorblechkörper aus einzelnen, durch Distanzstege (15) voneinander beabstandeten Teilblechpaketen (3) aufgebaut ist, und die Zwischenräume zwischen zwei aufeinanderfolgenden Teilblechpaketen radial verlaufende Kühlschlitze (8, 11) bilden, der Raum zwischen dem Statorblechkörperrücken und dem Gehäusemantel (1) in einzelne Kühlgaskammern (6, 7, 14) unterteilt ist, durch welche, von beiden Maschinenstirnseiten aus gesehen, abwechselnd Kühlgas radial durch erste Kühlschlitze (8) zum Rotor (10) hinführbar und sowohl das von den ersten Kühlschlitzen kommende als auch das im Rotor erwärmte Gas durch Zweite Kühlschlitze (11) vom Rotor (10) wegführbar ist, dadurch gekennzeichnet, dass die zweiten Kühlschlitze (11) mehrheitlich gegenüber den Statorwicklungsleitern (12) abgeschottet sind, dass zusätzliche in Axialrichtung verlaufende Kühlkanäle (13) im Bereich der zweiten Kühlschlitze (11) vorgesehen sind, welche gegenüber den Seitenfläche der Statorwicklungsleiter (12) offen sind und durch Ausnehmungen in den Seitenwändern der Statorwicklungsnuten und durch die Abschottung gebildet sind und welche Kühlkanäle (13) einströmseitig mit einem der ersten Kühlschlitze (8a) und abströmseitig mit mindestens einem der zweiten Kühlschlitze (11') verbunden sind.

2. Elektrische Maschine nach Anspruch 1, dadurch gekennzeichnet, dass die Zusätzlichen Kühlkanäle (13) durch seitliche, nur einen Bruchteil der Nuttiefe breite Ausnehmungen in den Seitenwänden der Statorwicklungs nuten gebildet sind und die Abschottung der Kühlkanäle durch die Distanzstege (15) erfolgt.

3. Elektrische Maschine nach Anspruch 2, dadurch gekennzeichnet, dass die in Maschinenlängsrichtung verlaufenden Abschnitte der Distanzstege (15) mit dem Nutgrund der Ausnehmungen fluchtet.

4. Elektrische Maschine nach Anspruch 2 oder 3, dadurch gekennzeichnet, dass die Distanzstege (15) in der Eintritts- und/oder Austrittspartie der Kanäle (13) mit Leiteinrichtung zur Führung der Kühlgasströmung zu bzw. aus den Kanälen versehen sind.

5. Elektrische Maschine nach einem der Ansprüche 1 bis 4, dadurch gekennzeichnet, dass die den Eintritts- und/ oder Austrittspartien der Kanäle (13) zugeordneten Kühlschlitze (8a, 11'; 8', 11') gegenüber dem Maschinenluftspalt (9) zumindest teilweise versohlossen sind.

6. Elektrische Maschine nach einem der Ansprüche 1 bis 5, dadurch gekennzeichnet, dass im mittigen Abschnitt der Maschine eine separate Zuströmkammer (14) vorgesehen ist, die über je einen Kühlschlitz (8') unmittelbar mit der Eintrittspartie der Kanäle (9) verbunden ist.

7. Elektrische Maschine nach einem der Ansprüche 1 bis 6, dadurch gekennzeichnet, dass im Bereich der Kühlschlitze (11) die Kanäle (13) durch Gasführungsprofilstücke (24) begrenzt sind, welche Profilstücke (24) vorzugsweise mit den Distanzstegen (15) fest verbunden sind.

**Claims**

1. Electric machine having a casing, a stator, with indirectly cooled stator winding conductors (12) arranged in stator slots, and a rotor (10), in which arrangement the laminated stator core is built up of individual part-stacks of laminations (3) which are spaced apart by spacing ribs (15), and the intermediate spaces between two successive part-stacks of laminations form radially extending cooling slots (8, 11), the space between the laminated stator core back and the casing jacket (1) is subdivided into individual cooling gas chambers (6, 7, 14) through which, seen from both ends of the machine, cooling gas can be alternately radially supplied through first cooling slots (8) to the rotor (10) and both the gas coming from the first cooling slots and the gas heated in the rotor can be conducted away from the rotor (10) by means of second cooling slots (11), characterized in that the second cooling slots (11) are severally partitioned off with respect to the stator winding conductors (12), that additional cooling ducts (13), extending in the axial direction, are provided in the area of the second cooling slots (11) which are open towards the side face of the stator winding conductors (12) and are formed by openings in the side walls of the stator winding slots and by the partitioning-off and which cooling ducts (13) are connected to one of the first cooling slots (8a) on the inlet side and to at least one of the second cooling slots (11') on the outlet side.

2. Electric machine according to Claim 1, characterized in that the additional cooling ducts (13) are formed by lateral openings, which only have a width of a fraction of the slot depth, in the side walls of the stator winding slots and the cooling ducts are partitioned off by means of the spacing ribs (15).

3. Electric machine according to Claim 2, characterized in that the sections of the spacing ribs (15) extending in the longitudinal direction of the machine are aligned with the slot bottom of the openings.

4. Electric machine according to Claim 2 or 3, characterized in that the spacing ribs (15) are provided with a guiding device for conducting the cooling gas flow to and out of the ducts in the inlet and/or outlet portion of the ducts (13).

5. Electric machine according to one of Claims 1 to 4, characterized in that the cooling slots (8a, 11'; 8', 11'), which are associated with the inlet and/or outlet portions of the ducts (13), are at least partly closed with respect to the machine air gap (9).

6. Electric machine according to one of Claims 1 to 5, characterized in that, in the centre section of the machine, a separate inlet chamber (14) is provided which is directly connected to the inlet portion of the ducts (9) via one cooling slot (8') each.

7. Electric machine according to one of Claims 1 to 6, characterized in that the ducts (13) are limited by gas conduction sections (24) in the area of the cooling slots (11), which sections (24) are preferably permanently connected to the spacing ribs (15).

## Revendications

1. Machine électrique avec une carcasse, un stator avec des conducteurs (12) de l'enroulement statorique refroidis indirectement disposés dans des encoches du stator, et un rotor (10), dans laquelle le paquet de tôles statoriques est constitué de paquets de tôles partiels (3) individuels espacés l'un de l'autre par des pièces d'écartement (15) et où les espaces intermédiaires entre deux paquets de tôles partiels successifs forment des fentes de refroidissement (8, 11) radiales, où l'espace entre l'arrière du paquet de tôles statoriques et la surface latérale de la carcasse (1) est subdivisé en chambres individuelles (6, 7, 14) à gaz de refroidissement à travers lesquelles, vu depuis les deux faces d'extrémité de la machine, alternativement le gaz de refroidissement peut être conduit radialement vers le rotor (10) à travers des premières fentes de refroidissement (8) et tant le gaz provenant des premières fentes de refroidissement que le gaz échauffé dans le rotor peut être évacué radialement du rotor (10) à travers des secondes fentes de refroidissement (11), caractérisée en ce que les secondes fentes de refroidissement (11) sont en majorité isolées par rapport aux conducteurs (12) de l'enroulement statorique, en ce qu'il est prévu dans la région des secondes fentes de refroidissement (11) des canaux de refroidissement supplémentaires (13) orientés en direction axiale, qui sont ouverts par rapport à la face latérale des conducteurs (12) de l'enroulement statorique et qui sont formés par des cavités dans les parois latérales des encoches de l'enroulement statorique et par les cloisons de séparation étanches, canaux de refroidissement (13) qui à l'entrée sont raccordés à l'une des premières fentes de refroidissement (8a) et à la sortie à au moins l'une des secondes fentes de refroidissement (11').

2. Machine électrique suivant la revendication 1, caractérisée en ce que les canaux de refroidissement supplémentaires (13) sont formés par des cavités latérales, larges seulement d'une fraction de la profondeur des encoches, ménagées dans les parois latérales des encoches de l'enroulement statorique, et en ce que la séparation étanche des canaux de refroidissement est réalisée par les pièces d'écartement (15).

3. Machine électrique suivant la revendication 2, caractérisée en ce que les tronçons des pièces d'écartement (15) orientés suivant la direction longitudinale de la machine viennent à fleur du fond des cavités.

4. Machine électrique suivant la revendication 2 ou 3, caractérisée en ce que les pièces d'écartement (15) sont, dans la partie d'entrée et/ou de sortie des canaux (13) pourvues d'un dispositif de déviation pour guider le courant de gaz de refroidissement vers respectivement hors des canaux.

5. Machine électrique suivant l'une ou l'autre des revendications 1 à 4, caractérisée en ce que les fentes de refroidissement (8a, 11'; 8', 11') associées aux parties d'entrée et/ou de sortie des canaux (13) sont fermées au moins partiellement par rapport à l'entrefer (9) de la machine.

6. Machine électrique suivant l'une ou l'autre des revendications 1 à 5, caractérisée en ce que, dans la partie médiane de la machine, il est prévu une chambre d'entrée séparée (14), qui est raccordée directement à la partie d'entrée de chaque canal (13) par une fente de refroidissement (8').

7. Machine électrique suivant l'une ou l'autre des revendications 1 à 6, caractérisée en ce que, dans la région des fentes de refroidissement (11), les canaux (13) sont limités par des pièces profilées de déviation du gaz (24), pièces profilées (24) qui sont de préférence solidement fixées aux pièces d'écartement (15).

FIG.1

FIG.2

# FIG. 3

# FIG.4

# FIG.5

# FIG.6